(19) Europäisches Patentamt
European Patent Office
Office européen des brevets

(11) **EP 4 376 485 A1**

(12) **EUROPEAN PATENT APPLICATION**
published in accordance with Art. 153(4) EPC

(43) Date of publication:
**29.05.2024 Bulletin 2024/22**

(21) Application number: **23794230.5**

(22) Date of filing: **19.06.2023**

(51) International Patent Classification (IPC):
***H04W 40/12*** (2009.01)

(86) International application number:
**PCT/CN2023/101100**

(87) International publication number:
**WO 2024/077997 (18.04.2024 Gazette 2024/16)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **13.10.2022 CN 202211250446**

(71) Applicant: **The 6th Research Institute of China
Electronics
Corporation
Beijing 102200 (CN)**

(72) Inventors:
• **SHI, Wenfeng
Beijing 102200 (CN)**
• **SHEN, Zhiwei
Beijing 102200 (CN)**
• **ZHU, Xiaoman
Beijing 102200 (CN)**

(74) Representative: **Barbaro, Gaetano et al
Società Italiana Brevetti S.p.A.
Via G. Carducci, 8
20123 Milano (IT)**

(54) **COMMUNICATION METHOD AND SYSTEM FOR SOFTWARE-DEFINED SATELLITE NETWORK, AND STORAGE MEDIUM**

(57) A method for communication in a software-defined satellite network, includes: determining a link quality of each communication path based on a link quality detection mechanism, wherein the communication path is a path for transmitting data from a start satellite node to a target satellite node, the link quality is a quality of communicating in the communication path, the link quality detection mechanism is a mechanism for detecting the link quality in the software defined satellite network; and determining a target communication path for data transmission from each communication path based on the link quality, and enabling each satellite in the software-defined satellite network to communicate based on the target communication path.

S110

determining a link quality of each communication path
based on a link quality detection mechanism

S120

determining a target communication path for data
transmission from each communication path based on the
link quality

FIG. 2

**Description**

**TECHNICAL FIELD**

The disclosure relates to a field of satellite communication, and specifically relates to a method and a system for communication in a software-defined satellite network, a storage medium and a computer-readable storage medium.

**BACKGROUND**

A software-defined satellite network is a technology that applies a software-defined network (SDN) to satellite network management, and the software-defined satellite network may reduce the difficulty of route management in a satellite network. However, when the SDN calculates routes for forwarding data, a shortest path is usually considered. Due to influences of a space environment where a satellite is located and a high-speed motion of the satellite, a satellite link often has problems of a high bit error rate, a long propagation delay and a frequent link switching. If the route is calculated only based on the shortest path without considering other factors such as a bit error rate of the link, which affects a quality of data transmission, resulting in problems such as data error and data loss. For example, the high-speed motion of the satellite may enable a data transmission path to frequently change. A distance between the satellites and a distance between the satellite and the ground are relatively long, and spatial environment problems such as an electromagnetic interference and spatial radiation between the satellites may occur, which may cause the bit error rate of the link to increase. The route calculation method by taking the shortest path as a communication path does not consider these factors, and it is easy to select a link with the high bit error bit for data transmission, resulting in a poor quality of data transmission, an error and loss of data transmission, which affects a data forwarding efficiency.

**SUMMARY**

The disclosure aims to provide a method and a system for communication in a software-defined satellite network, a computer-readable storage medium, a communication device in a software-defined satellite network and a program product, so as to improve the quality of data transmission between the satellites in the software-defined satellite network, so that data transmitted in the software-defined satellite network is more accurate.

In a first aspect, a method for communication in a software-defined satellite network is provided in an embodiment of the present disclosure, and includes: determining a link quality of each communication path based on a link quality detection mechanism, in which the communication path is a path for transmitting data from a start satellite node to a target satellite node, the link quality is a quality of communicating in the communication path, the link quality detection mechanism is a mechanism for detecting the link quality in the software defined satellite network; and determining a target communication path for data transmission from each communication path based on the link quality, and enabling each satellite in the software-defined satellite network to communicate based on the target communication path.

In the embodiment of the disclosure, the link quality of each communication path is detected by the link quality detection mechanism, so that the link quality of each communication path may be determined, and a communication path whose link quality meets a requirement may be selected for communication, that is, a target communication path is determined for communication. Satellite communication is performed in the target communication path, which may effectively ensure the quality of data transmission between the satellites and reduce a packet loss rate of the software-defined satellite network. At the same time, since the target communication path usually has a high link quality, a number of times of retransmissions when performing data transmission may be effectively reduced, a transmission delay may be reduced, and the efficiency of data transmission may be improved.

In an embodiment, determining the link quality of each communication path based on the link quality detection mechanism includes: acquiring a data retransmission control signaling record between any two adjacent satellites in the software-defined satellite network, in which the data retransmission signaling record is a record of a signaling generated by performing data retransmission between satellites in the software-defined satellite network; determining a link quality factor for communicating between the corresponding adjacent satellites based on the data retransmission signaling record; and determining the link quality of each communication path based on the link quality factor.

In the embodiment of the disclosure, the data retransmission is a data transmission mode used by dealing with a link bit error rate when performing data transmission in the software-defined satellite network, and the data retransmission mechanism may reduce the influence of the link bit error rate on the data transmission, and may enhance reliability of data transmission between the satellites by controlling data transmission between the satellites. Data is transmitted between the satellites in the software-defined satellite network through the data retransmission mechanism, and the data retransmission signaling record includes the record of the signaling related to the data retransmission, and the data retransmission signaling may reflect the quality of data transmission to a certain extent. Therefore, a link quality factor may be calculated using the record of the data retransmission signaling, and a link quality of the whole communication path may be calculated based on the link quality factor. Based on the method of calculating the link quality by using the record of the data retransmission signaling, a process of calculating the link quality factor and the link quality may be simplified, which improves the efficiency of determining the link quality.

In an embodiment, determining the link quality factor for communicating between the corresponding adjacent satellites based on the data retransmission signaling record includes: acquiring a recording parameter during data transmission from the data retransmission signaling record, in which the recording parameter includes a signaling generated by performing data retransmission; and determining the link quality factor based on a first preset link quality factor formula and the recording parameter, in which the first preset link quality factor formula includes a relationship between the recording parameter and the link quality factor.

In the embodiment of the disclosure, performing data transmission by using the data retransmission may generate a signaling parameter, i.e., a recording parameter, related to the data retransmission mechanism, in which the recording parameter may reflect a quality of data transmission, and the first preset link quality factor formula includes a relationship between the recording parameter and the link quality factor. Thus, the link quality factor between adjacent satellites may be calculated by using the first preset link quality factor formula and the recording parameter, in which the link quality factor reflects the quality of communication between any adjacent satellites. The method of calculating the link quality factor through the first preset link quality factor formula is simple and convenient, which may effectively simplify a process of calculating the link quality of the communication path.

In an embodiment, acquiring the data retransmission signaling record between the any two adjacent satellites in the software-defined satellite network includes: acquiring the data retransmission signaling record each other preset duration, and determining the link quality based on the data retransmission signaling record acquired each other preset duration.

In the embodiment of the disclosure, the data retransmission signaling record is acquired each other preset duration, so that the acquired data retransmission signaling record is real-time, the link quality determined by the data retransmission signaling record and the target communication path determined based on the link quality are also real-time. Therefore, the satellite performs data transmission based on the real-time target communication path, which may ensure the quality of data transmission.

In an embodiment, determining the link quality factor for communicating between the corresponding adjacent satellites based on the data retransmission signaling record includes: determining the link quality factor based on a historical link quality factor, a preset attenuation factor, the recording parameter and a second preset link quality factor formula. The second preset link quality factor formula includes a relationship among the recording parameter, the historical link quality factor, the preset attenuation factor and the link quality factor.

In the embodiment of the disclosure, the preset attenuation factor is configured based on the spatial environment, and the second preset link quality factor formula includes a relationship among the recording parameter, the historical link quality factor, the preset attenuation factor and the link quality factor. The link quality factor is calculated based on the second preset link quality factor formula, the historical link quality factor and the preset attenuation factor, so that the calculated link quality factor is related to a historical record and an environment. As such, the calculated link quality is more accurate, and the link quality is more consistent with a communication environment where each satellite is located and a motion condition of the satellite.

In an embodiment, determining the link quality of each communication path based on the link quality factor includes: for each communication path, obtaining the link quality corresponding to the communication path by multiplying all the link quality factors between the satellites in the communication path.

In the embodiment of the disclosure, the link quality factor obtained by the signaling record of the data retransmission mechanism, may reflect the quality of communication between adjacent satellites, and by multiplying the link quality factors of all links between satellites in a forwarding path, the link quality corresponding to the communication path may be obtained. Multiplying all the link quality factors is easy to implement, which may effectively simplify a process of calculating the link quality, and improve the efficiency of determining the link quality.

In an embodiment, before determining the link quality of each communication path, the method further includes: determining a cumulative propagation delay of each communication path based on a propagation delay of data transmission between the satellites; and determining a communication path corresponding to a minimum cumulative propagation delay as an initial target communication path, and enabling each satellite to perform data transmission based on the initial target communication path.

In the embodiment of the disclosure, before the link quality is not determined, the propagation delay of the communication path may be calculated, the communication path corresponding to the minimum cumulative propagation delay may be selected and determined as the initial target communication path, and the satellites may be controlled based on the initial target communication path, which may effectively reduce the propagation delay of data transmission between the satellites, thereby improving the quality of data transmission between the satellites.

In an embodiment, after determining the target communication path for data transmission from each communication path based on the link quality, the method further includes: generating a communication rule based on the target communication path; sending the communication rule to each satellite in the software-defined satellite network, and enabling each satellite to communicate based on the communication rule; and controlling each satellite in the software-defined satellite network to perform data transmission based on the target communication path.

In the embodiment of the disclosure, the communication rule between the satellites is generated based on the target communication path, so that each satellite is enabled to communicate based on the communication rule corresponding to the target communication path, which improves the quality of data transmission between the satellites.

In a second aspect, a system for communication in a software-defined satellite network is provided in an embodiment of the disclosure, which includes a plurality of satellites and a satellite network management center for performing the method for communication in the software-defined satellite network as described in any one of the first aspect.

In a third aspect, a computer-readable storage medium stored with a computer program is provided in an embodiment of the disclosure. When the computer program is running on a computer, the computer is caused to perform the method for communication in the software-defined satellite network as described in any one embodiment of the first aspect.

In a fourth aspect, a communication device in a software-defined satellite network is provided in an embodiment of the disclosure, which includes a processor and a memory storing a computer program instruction. When the computer program instruction is executed by the processor, the method for communication in the software-defined satellite network as described in any one embodiment of the first aspect is implemented.

In a fifth aspect, a computer program product including a computer program is provided in an embodiment of the disclosure. When the computer program is executed by a processor, the method for communication in the software-defined satellite network as described in any one embodiment of the first aspect is implemented.

In order to make the above purposes, features and advantages of the present disclosure more obvious and understandable, preferred embodiments are given below and described in combination with accompanying drawings.

BRIEF DESCRIPTION OF THE DRAWINGS

In order to explain the technical solutions in the embodiments of the present disclosure more clearly, accompanying drawings in the embodiments will be briefly introduced below. It should be understood that the following accompanying drawings only illustrate certain embodiments of the present disclosure. Those skilled in the art may obtain other related accompanying drawings based on the accompanying drawings without any creative work.

FIG. 1 is a diagram illustrating a system for communication in a software-defined satellite network according to an embodiment of the present disclosure.
FIG. 2 is a flowchart illustrating a method for communication in a software-defined satellite network according to an embodiment of the present disclosure.
FIG. 3 is a flowchart illustrating a method for communication in a software-defined satellite network according to an embodiment of the present disclosure.

DETAILED DESCRIPTION

In order to make the purposes, the technical solutions and the advantages of the present disclosure more clear, the present disclosure will be further described below in combination with accompanying drawings and embodiments. It should be understood that, specific embodiments described here are merely to explain the present disclosure, rather than a limitation of the present disclosure.

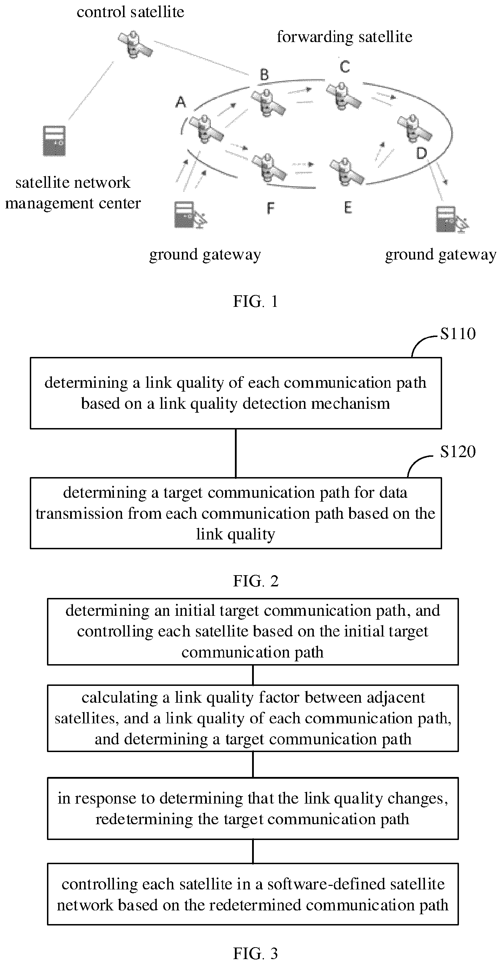

As illustrated in FIG. 1, FIG. 1 is a diagram illustrating a system for communication in a software-defined satellite network according to an embodiment of the present disclosure.

A satellite communication system includes a plurality of satellites and a satellite network management center.

The plurality of satellites include a control satellite and a forwarding satellite.

In the embodiments of the present disclosure, the plurality of satellites constitute a software-defined satellite network, and the satellite network includes a control satellite and a forwarding satellite. The control satellite, with a wide coverage area, may establish a communication with other satellites in the software-defined satellite network, and is configured to send to each forwarding satellite, a communication rule for controlling communication of each forwarding satellite. The control satellite may be a geosynchronous earth orbit satellite (GEO). The forwarding satellite is configured to forward data, and different satellites are used based on a space height. For example, the forwarding satellite may be a low earth orbit satellite (LEO), a medium orbit earth satellite (MEO), etc.

In the embodiment, the plurality of satellites may perform data transmission based on a delay tolerant network (DTN) protocol. The DTN protocol is a mode of forwarding data hop by hop, so that a communication connection between a satellite as a transmitter and a satellite as a receiver is not necessarily maintained all the time. Meanwhile, a DTN protocol stack also has a custody transfer mechanism that data may be temporarily stored when a transmission path is lacked, namely a communication connection is not established, so that data transmission may be performed after the communication connection is established, and the software-defined satellite network may also solve the problem of interruption in the communication connection. Thus, the communication quality of the software-defined satellite network may be improved by using the DTN protocol. The details of the DTN protocol may refer to the related art, which will not be further described here.

The DTN protocol stack is introduced in a convergence layer protocol, to achieve interactions between the DTN protocol and other protocols. Based on the convergence layer protocol, normal communication between different satellites, and normal communication between the satellite and the satellite network management center may be achieved.

In an embodiment, the convergence layer protocol is a Licklider transmission protocol (LTP). The LTP protocol has a data retransmission mechanism. When the LTP protocol transmits data, a data transmitter may generate an export session and an import session, and transmits data in the export session and the import session. When the LTP protocol transmits the data, a checkpoint may be configured at the end of each piece of data. A piece of data may be divided into a plurality of segments. The receiver may reply a report segment to the transmitter in response to receiving the checkpoint, and the report segment includes a data segment number that has not been received. The transmitter may retransmit the data segment in the report segment that has not been received based on the content of the report segment. The last data segment in the retransmitted data segments is also labeled as a checkpoint. The above transmission process is repeated until the receiver receives the complete data. When the transmission is completed, the export session and the import session may be terminated. The checkpoint, the export session, the import session, and the report segment are signalings of the data retransmission mechanism.

It may be understood that, if no error occurs in a data transmission process, i.e., when no data retransmission is performed, a number of export sessions, a number of import sessions, a number of checkpoints and a number of reporting segments are all equal to 1. When retransmission is performed, the number of export sessions and the number of import sessions are unchanged, while the number of checkpoints and the number of report segments are greater than 1.

The satellite network management center is configured to control each satellite for data transmission. The satellite network management center controls each satellite in the software-defined satellite network to communicate based on the method for communication in the software-defined satellite network according to the embodiments of the present disclosure. The method for communication in the software-defined satellite network is illustrated below. A ground gateway is configured to receive data from the forwarding satellite or to send data to the forwarding satellite.

As illustrated in FIG. 2, FIG. 2 is a flowchart illustrating a method for communication in a software-defined satellite network according to an embodiment of the present disclosure. The satellite communication method includes the following steps.

At S110, the link quality of each communication path is determined based on the link quality detection mechanism.

In the embodiment, a communication path is a path for transmitting data from a start satellite node to a target satellite node. For example, if the start satellite node is A and the target satellite node is D, the communication path may be A-B-C-D, in which B and C are two forwarding satellites in the software-defined satellite network.

In the embodiment, since different communication paths are affected by different factors such as space and environment, communication qualities of different communication paths may be different, that is, different communication paths have different link qualities. For example, forwarding satellites in the communication path A-B-C-D are different from those in the communication path A-F-E-D, which may result in different link qualities of the communication path A-B-C-D and the communication path A-F-E-D.

In the embodiment, the link quality detection mechanism is a mechanism for detecting the link quality in the software-defined satellite network. The link quality of each communication path may be determined based on the link quality detection mechanism.

Since the communication between the satellites is performed by using the data retransmission mechanism in the LTP protocol, in the embodiments of the disclosure, the data retransmission mechanism used by the satellites may be used to determine the quality of the path for transmitting data from the start satellite node to the target satellite node, that is, determine the link quality of the communication path. In other implementations, the link quality may be calculated by other methods, for example, by calculating a data integrity or a signal quality. This is not limited here.

In an embodiment, determining the link quality of each communication path based on the link quality detection mechanism includes: acquiring a data retransmission signaling record between any two adjacent satellites in the software-defined satellite network; determining a link quality factor for communicating between the corresponding adjacent satellites based on the data retransmission signaling record; and determining the link quality of each communication path based on the link quality factor.

In the embodiment, the data retransmission signaling record is a record of a signaling generated by performing data retransmission between satellites in the software-defined satellite network. The adjacent satellites refer to two forwarding satellites capable of transmitting data in the software-defined satellite network, and data transmission between the adjacent satellites is performed by using the data retransmission mechanism. When the adjacent satellites transmit the data, a signaling generated in a data transmission process may be recorded to generate a data retransmission signaling record, and the data retransmission signaling record may record a number of signalings generated by performing data transmission between the adjacent satellites, such as checkpoints, export sessions, import sessions, and report segments.

In the embodiment, a link quality factor of data transmission between any two adjacent satellites may be calculated based on the data retransmission signaling record between the two adjacent satellites. The link quality factor for communicating between the any two adjacent satellites may be determined based on data retransmission signaling records between all adjacent satellites. In some implementations, the link quality factor between the any two adjacent satellites may be saved, to generate a table of link quality factor records, which is convenient for direct use.

The satellite network management center may acquire the data retransmission signaling record from each satellite, and calculate the link quality factor based on the data retransmission signaling record.

In an embodiment, determining the link quality of each communication path based on the link quality detection mechanism includes: acquiring a recording parameter during transmission from the data retransmission signaling record; and determining the link quality factor based on a first preset link quality factor formula and the recording parameter.

In the embodiment, the recording parameter includes a signaling generated by performing data retransmission, that is, the recording parameter includes signalings such as the checkpoint, the export session, the import session and the report segment that are generated by transmitting data based on the data transmission mechanism, and their respective numbers. A number of times of retransmissions may be determined based on the recording parameter, and the quality of data transmission may be determined to a certain extent based on the number of times of retransmissions.

Therefore, the link quality factor may be determined based on the first preset link quality factor formula and the recording parameter, and the link quality factor reflects the quality of data transmission or reflects the bit error rate. The first preset link quality factor formula is:

$$f = \frac{\text{checkpoint} + \text{report segment}}{\text{export session} + \text{import session}}$$

where, f is a link quality factor, checkpoint is a number of checkpoints, report segment is a number of report segments, export session is a number of export sessions, and import session is a number of import sessions.

The link quality factor between the adj acent satellites may be calculated based on the first preset link quality factor formula and the recording parameter. Since the number of import sessions and the number of export sessions are equal to 1 when transmitting the same data, the number of checkpoints and the number of report segments may increase when performing retransmission, that is, the link quality factor may increase when performing the retransmission. Therefore, the greater the link quality factor, the worse the quality of data transmission between the adjacent satellites.

In an embodiment, a data retransmission signaling record is acquired each other preset duration, and the link quality is determined based on the data retransmission signaling record acquired each other preset duration.

In the embodiment, since the satellite moves at a high speed in the space, and a satellite in one communication path may also be switched, a data retransmission signaling record may be acquired and the link quality may be calculated each other preset duration, to ensure timeliness of the link quality. The preset duration may be selected based on the requirement, for example, 0.5s, 1s, 2s.

In an embodiment, the link quality factor is determined based on a historical link quality factor, a preset attenuation factor, the recording parameter and a second preset link quality factor formula. The second preset link quality factor formula includes a relationship among the recording parameter, the historical link quality factor, the preset attenuation factor and the link quality factor.

In the embodiment, the second preset link quality factor formula is:

$$f = (1 - \alpha) \times f_0 + \alpha \times \frac{\sum_t (\text{checkpoint} + \text{report segment})}{\sum_t (\text{export session} + \text{import session})}$$

where, f is a link quality factor, checkpoint is a number of checkpoints, report segment is a number of report segments, export session is a number of export sessions, import session is a number of import sessions, $f_0$ is a historical link quality factor, $\alpha$ is a preset attenuation factor, a value range of $\alpha$ is (0,1), and t is a statistical period for obtaining a data transmission record.

In the embodiment, the attenuation factor may be reasonably set based on the space environment, and the historical link quality factor may be selected based on the requirement, such as, a link quality factor at a previous moment or a link quality factor at other moment.

The link quality factor is calculated based on the preset attenuation factor and the historical link quality factor, so that the link quality factor is associated with the historical record and the space environment, and thus the link quality factor is more consistent with a space condition where the satellite is located and a motion condition of the satellite, which reduces an error between the link quality factors at different moments, and improves the accuracy of the calculated link quality factor.

In the embodiment, the link quality factor may be calculated by the satellite network management center based on the data retransmission signaling record acquired from each satellite. In some embodiments, the link quality factor may be calculated by any of the adjacent satellites, and sent to the satellite network management center after calculation. The forwarding satellite may send the link quality factor to the control satellite in a data type of a Bundle packet, and the control satellite sends the link quality factor to the satellite network management center.

In an embodiment, determining the link quality of each communication path based on the link quality factor includes: for each communication path, obtaining the link quality corresponding to the communication path by multiplying link quality factors of all the links in the communication path.

In the embodiment, the satellite network management center is stored with a connection diagram of satellites in the software-defined satellite network. The connection diagram includes a list of communication time at satellite nodes, and reflects real communication information between nodes in a satellite period of revolution, including various information such as a satellite node number, a start time and an end time of a link between the nodes, a propagation delay between the nodes and a link quality factor. Therefore, the satellite network management center may predict tracks of the satellites and determine different communication paths. Calculating the communication path may refer to the related art. For example, the communication path may be calculated based on a Dijkstra algorithm, which will not be repeated here.

After each communication path is determined, the link quality corresponding to each communication path may be obtained by multiplying link quality factors of links between satellites involved in each communication path.

Further, a communication path corresponding to a minimum link quality value may be selected as a target communication path, so that each satellite in the software-defined satellite network may communicate based on the target communication path.

In an embodiment, before the link quality of each communication path is determined, a cumulative propagation delay of each communication path is determined based on a propagation delay of data transmission between the satellites; and a communication path corresponding to a minimum cumulative propagation delay is determined as an initial target communication path, and each satellite is enabled to perform data transmission based on the initial target communication path.

In the embodiment, the link quality is calculated after the satellites in the communication path perform communication, and before the link quality of the communication path is not determined, communication between the satellites may be performed based on the initial target communication path.

In the embodiment, the satellite network management center presets a propagation delay of data transmission between adjacent satellites, so that the initial target communication path may be determined based on the propagation delay. Each communication path may be determined first, and propagation delays between the satellites in the communication path are accumulated to obtain a cumulative propagation delay corresponding to each communication path, and a communication path corresponding to a minimum value in the cumulative propagation delay is selected as an initial target communication path. If there are communication paths with the same minimum value, any one of such communication paths is selected as the initial target communication path.

At S 120, the target communication path for data transmission is determined from each communication path based on the link quality.

The target communication path may be a communication path with an optimal link quality, or may be other communication path that meets a link quality requirement, and when there are a plurality of communication paths that meet the link quality requirement at the same time, one of the plurality of communication paths may be selected as a target communication path. It may be understood that, the target communication path may be reasonably selected by the user according to the link quality requirements, and performance of the target communication path shall not be a limitation of the disclosure.

In an embodiment, after determining the target communication path for data transmission from each communication path based on the link quality, the method further includes: generating a communication rule based on the target communication path; sending the communication rule to each satellite in the software-defined satellite network, and enabling each satellite to communicate based on the communication rule.

In the embodiment, when the target communication path is determined, the satellite network management center generates a flow table for the target communication path and sends the flow table to a control satellite, and the control satellite sends the flow table to each forwarding satellite, so that each forwarding satellite performs data forwarding based on the flow table. The flow table includes the target communication path and a communication rule, and the communication rule is an execution mode for performing data transmission between the satellites based on the target communication path. The content of the flow table may refer to the related art, which will not be repeated here.

In the embodiment, when the communication path changes and the link quality changes, the satellite network management center may recalculate the link quality, redetermine the target communication path, generate a flow table, and send the flow table to each satellite. After receiving a new flow table, the satellite communicates based on the new flow table. In addition, the satellite may delete an expired flow table at the same time, which avoids occupation of the expired flow table on a storage space of the satellite.

In some embodiments, when a link quality change rate exceeds a preset threshold, a target communication path may be redetermined. The flow table may be updated in real time by recalculating the target communication path, thereby ensuring the communication quality of each satellite in the software-defined satellite network.

In the embodiments of the disclosure, the link quality of each communication path is detected based on the link quality detection mechanism, so that the link quality of each communication path may be determined, and a communication path whose link quality meets a requirement may be selected for communication, that is, a target communication path is determined for communication. Satellite communication is performed in the target communication path, which may effectively ensure the quality of data transmission between the satellites and reduce a packet loss rate of the software-defined satellite network. At the same time, since the target communication path usually has a high link quality, a number of times of retransmissions when performing the data transmission may be effectively reduced, a transmission delay may be reduced, and the efficiency of data transmission may be improved.

For convenience of understanding of those skilled in the art, an implementation process of an embodiment of the disclosure is described. As illustrated in FIG. 3, FIG. 3 is a flowchart illustrating a method for communication in a software-defined satellite network according to an embodiment of the present disclosure.

First, the satellite network management center determines a communication path existed between the satellites based on a preset connection diagram between satellites, calculates a cumulative propagation delay of each communication path based on a preset propagation delay, and determines a communication path corresponding to a minimum value of the cumulative propagation delay as an initial target communication path. A flow table of the initial target communication path is generated and sent to the control satellite, and the control satellite sends the flow table to each of forwarding satellites, so that each satellite communicates based on the flow table. For example, there are two communication paths between a forwarding satellite A and a forwarding satellite D, which are respectively A-B-C-D and A-F-E-D, and the corresponding cumulative propagation delays are respectively 1s and 2s. In this case, A-B-C-D may be selected as the initial target communication path, and a flow table of A-B-C-D may be generated and sent to the control satellite, and the control satellite sends the flow table to the forwarding satellite for execution. B, C, F, E respectively each represents a forwarding satellite.

Then, a data retransmission signaling record is acquired each other preset duration when each forwarding satellite communicates. The link quality factor is calculated based on the recording parameter in the data retransmission signaling record, and sent to the satellite network management center. The satellite network management center may store the link quality factor, and calculate the link quality of each communication path based on the link quality factor. For example, a link quality factor between A and B is 1, a link quality factor between B and C is 2, and a link quality factor between A and F is 1.5. Based on the link quality factor, the calculated link quality of A-B-C-D is 7, and the calculated link quality of A-F-E-D is 8. The link quality of A-B-C-D is less than the link quality of A-F-E-D, so communication continues to be performed by taking the A-B-C-D as a target communication path.

Then, if the link quality at a current moment changes greatly compared with a previous moment, the satellite network management center may acquire a data retransmission signaling record between the adjacent satellites, recalculate the link quality factor, calculate the link quality of the communication path based on the link quality factor, and determine the communication path corresponding to the minimum value of the link quality as the target communication path. For example, the changed link quality between B and C is 3, the link quality of A-F-E-D changes from 8 to 12, and the link quality of A-F-E-D remains unchanged, so the target communication path may be determined as A-F-E-D.

Finally, the satellite network management center generates a flow table based on the target communication path, and sends the flow table to the control satellite. The control satellite sends the flow table to each forwarding satellite, and the forward satellite deletes the expired flow table, and communicates based on a new flow table. For example, the satellite network management center generates a flow table of the target communication path A-F-E-D and sends the flow table to the control satellite and the forwarding satellite. The control satellite and the forwarding satellite perform data transmission based on the flow table of the target communication path A-F-E-D, and delete the flow table of the original communication path A-B-C-D.

Before detecting that the satellite in the communication path is about to change, the satellite network management center may further redetermine a target communication path, generate a new flow table, and send the new flow table to each satellite.

Based on the same invention concept, a computer-readable storage medium, a communication device in a software-defined satellite network and a computer program product are further provided in the embodiments of the disclosure.

A computer-readable storage medium with a computer program stored thereon is provided in an embodiment of the present disclosure. When the computer program is executed by a computer, the method for satellite communication as described in the above embodiment is implemented.

A communication device in a software-defined satellite network is provided in an embodiment of the disclosure, which includes a processor and a memory storing a computer program instruction. When the computer program instruction is executed by the processor, the method for communication in the software-defined satellite network as described in any one embodiment of the first aspect is implemented.

A computer program product including a computer program is provided in an embodiment of the disclosure. When the computer program is executed by a processor, the method for communication in the software-defined satellite network as described in any one embodiment of the first aspect is implemented.

In the embodiments according to the present disclosure, it is to be understood that the disclosed apparatus and the method may be implemented in other ways. The apparatus embodiments are merely illustrative. For example, division of units is only a logical function division and there may be additional division modes in an actual implementation. For another example, a plurality of units or components may be combined or may be integrated into another system, or some features may be omitted, or not performed. The coupling or direct coupling or communication connection of each other shown or discussed may be an indirect coupling or communication connection via some communication interfaces, devices, or units, which may be electrical, mechanical or in other forms.

Various implementations of systems and technologies described herein may be implemented in a digital electronic circuit system, an integrated circuit system, a field programmable gate array (FPGA), a dedicated application specific integrated circuit (ASIC), a system on a chip (SoC), a load programmable logic device (CPLD), a computer hardware, a firmware, a software, and/or combinations thereof. The various implementations may include: being implemented in one or more computer programs that may be executed and/or interpreted on a programmable system including at least one programmable processor, where the programmable processor may be a dedicated or a general-purpose programmable processor that may receive data and instructions from a storage system, at least one input device, and at least one output device, and transmit the data and instructions to the storage system, the at least one input device, and the at least one output device.

The computer codes configured to execute a method in the present disclosure may be written with one or any combination of multiple programming languages. These programming languages may be provided to a processor or a controller of a general purpose computer, a dedicated computer, or other apparatuses for programmable data processing, so that the function/operation specified in the flowchart and/or block diagram may be performed when the program codes are executed by the processor or controller. The computer codes may be executed completely or partly on the machine, executed partly on the machine as an independent software package and executed partly or completely on the remote machine or server.

In the context of the present disclosure, a machine-readable medium may be a tangible medium that may contain or store programs intended for use in or in conjunction with an instruction execution system, apparatus, or device. The machine-readable medium may be a machine readable signal medium or a machine readable storage medium. The machine-readable storage medium may include but not limited to an electronic, magnetic, optical, electromagnetic, infrared, or semiconductor system, apparatus or device, or any appropriate combination thereof. The more specific example of the machine readable storage medium includes an electronic connector with one or more cables, a portable computer disk, a hardware, a random access memory (RAM), a read-only memory (ROM), an Erasable programmable read-only ROM (EPROM) or a flash memory, an optical fiber device, a portable optical disk read-only memory (CDROM), an optical storage device, a magnetic storage device, or any appropriate combination of the above.

In order to provide interactions with the user, the systems and technologies described here may be implemented on a computer, and the computer has: a display device for displaying information to the user (for example, a cathode ray tube (CRT) or a liquid crystal display (LCD) monitor); and a keyboard and a pointing device (for example, a mouse or a trackball) through which the user may provide inputs to the computer. Other types of devices may further be configured to provide interactions with the user. For example, a feedback provided for the user may be any form of sensory feedback (for example, a visual feedback, an auditory feedback, or a tactile feedback); and an input from the user may be received in any form (including an acoustic input, a speech input, or a tactile input).

The systems and technologies described herein may be implemented in a computing system including back-end components (for example, as a data server), or a computing system including middleware components (for example, an application server), or a computing system including front-end components (for example, a user computer with a graphical user interface or a web browser through which the user may interact with the implementation of the system and technology described herein), or a computing system including any combination of such back-end components, middleware components or front-end components. The system components may be connected to each other through any form or medium of digital data communication (for example, a communication network). Examples of communication networks include: a local area network (LAN), a wide area network (WAN), a blockchain network, and an internet.

The computer system may include a client and a server. The client and server are generally far away from each other and generally interact with each other through a communication network. The relation between the client and the server is generated by computer programs that run on the corresponding computer and have a client-server relationship with each other. The server may be a cloud server, and may also be a server with a distributed system, or a server in combination with a blockchain.

The terms described in the embodiments of the present disclosure are only for the purpose of describing specific embodiments and are not intended to limit the embodiments of the present disclosure. The singular forms "a/an", "the" used in the embodiments of the disclosure and the appended claim are also intended to include plural forms, unless the context clearly indicates otherwise. It should also be understood that the term "and/or" used in the present disclosure means and includes any or all possible combinations of one or more associated listed items.

It should be understood that, although the terms first, second, etc. may be used in the embodiments of the present disclosure to describe various information, such information shall not be limited to these terms. These terms are only used to distinguish the same category of information. For example, without departing from the scope of the embodiments of the present disclosure, first information may also be referred to as second information, and similarly, second information may also be referred to as first information, which depends on the context. For example, the word "in case of" and "if' as used herein may be interpreted as "when" or "in response to determining".

The forgoing descriptions are only embodiments of the disclosure, and are not used to limit the protection scope of the disclosure, and various modifications and changes may be made to the disclosure for those skilled in the art. Any modification, equivalent substitution, improvement, etc., made within the spirit and principle of the present disclosure shall be included within the protection scope of the present disclosure.

**Claims**

1. A method for communication in a software-defined satellite network, comprising:

   determining a link quality of each communication path based on a link quality detection mechanism, wherein the communication path is a path for transmitting data from a start satellite node to a target satellite node, the link quality is a quality of communicating in the communication path, and the link quality detection mechanism is a mechanism for detecting the link quality in the software defined satellite network; and
   determining a target communication path for data transmission from each communication path based on the link quality, and enabling each satellite in the software-defined satellite network to communicate based on the target communication path.

2. The method according to claim 1, wherein determining the link quality of each communication path based on the link quality detection mechanism comprises:

   acquiring a data retransmission signaling record between any two adjacent satellites in the software-defined satellite network, wherein the data retransmission signaling record is a record of a signaling generated by performing data retransmission between satellites in the software-defined satellite network;
   determining a link quality factor for communicating between the corresponding adjacent satellites based on the data retransmission signaling record; and
   determining the link quality of each communication path based on the link quality factor.

3. The method according to claim 2, wherein determining the link quality factor for communicating between the corresponding adjacent satellites based on the data retransmission signaling record comprises:

   acquiring a recording parameter during transmission from the data retransmission signaling record, wherein the recording parameter comprises a signaling generated by performing data retransmission; and
   determining the link quality factor based on a first preset link quality factor formula and the recording parameter, wherein the first preset link quality factor formula comprises a relationship between the recording parameter and the link quality factor.

4. The method according to claim 2, wherein acquiring the data retransmission signaling record between the any two adjacent satellites in the software-defined satellite network comprises:
   acquiring the data retransmission signaling record each other preset duration, and determining the link quality based on the data retransmission signaling record acquired each other preset duration.

5. The method according to claim 2 or 4, wherein determining the link quality factor for communicating between the corresponding adjacent satellites based on the data retransmission signaling record comprises:
determining the link quality factor based on a historical link quality factor, a preset attenuation factor, a recording parameter during transmission acquired from the data retransmission signaling record and a second preset link quality factor formula, wherein the second preset link quality factor formula comprises a relationship among the recording parameter, the historical link quality factor, the preset attenuation factor and the link quality factor.

6. The method according to any one of claims 2 to 5, wherein determining the link quality of each communication path based on the link quality factor comprises:
for each communication path, obtaining the link quality corresponding to the communication path by multiplying all the link quality factors between the satellites in the communication path.

7. The method according to any one of claims 1 to 6, wherein before determining the link quality of each communication path, the method further comprising:

determining a cumulative propagation delay of each communication path based on a propagation delay of data transmission between the satellites; and
determining a communication path corresponding to a minimum cumulative propagation delay as an initial target communication path, and enabling each satellite to perform data transmission based on the initial target communication path.

8. The method according to any one of claims 1 to 7, wherein after determining the target communication path for data transmission from each communication path based on the link quality, the method further comprising:

generating a communication rule based on the target communication path;
sending the communication rule to each satellite in the software-defined satellite network, and enabling each satellite to communicate based on the communication rule; and
controlling each satellite in the software-defined satellite network to perform data transmission based on the target communication path.

9. A system for communication in a software-defined satellite network, comprising:

a plurality of satellites; and
a satellite network management center for performing the method of any one of claims 1 to 8.

10. A computer-readable storage medium stored with a computer program, wherein when the computer program is running on a computer, the computer is caused to perform the method of any one of claims 1 to 8.

11. A communication device in a software-defined satellite network, comprising:

a processor; and
a memory storing a computer program instruction;
wherein when the computer program instruction is executed by the processor, the method of any one of claims 1 to 8 is implemented.

12. A computer program product, comprising a computer program, wherein when the computer program is executed by a processor, the method of any one of claims 1 to 8 is implemented.

control satellite

forwarding satellite

satellite network
management center

ground gateway          ground gateway

FIG. 1

S110

determining a link quality of each communication path
based on a link quality detection mechanism

S120

determining a target communication path for data
transmission from each communication path based on the
link quality

FIG. 2

determining an initial target communication path, and
controlling each satellite based on the initial target
communication path

calculating a link quality factor between adjacent
satellites, and a link quality of each communication path,
and determining a target communication path

in response to determining that the link quality changes,
redetermining the target communication path

controlling each satellite in a software-defined satellite
network based on the redetermined communication path

FIG. 3

## INTERNATIONAL SEARCH REPORT

| | International application No. |
|---|---|
| | **PCT/CN2023/101100** |

**A. CLASSIFICATION OF SUBJECT MATTER**

H04W40/12(2009.01)i; H04L45/76(2022.01)i; H04B7/185(2006.01)n; H04L45/302(2022.01)n; H04W84/06(2009.01)n

According to International Patent Classification (IPC) or to both national classification and IPC

**B. FIELDS SEARCHED**

Minimum documentation searched (classification system followed by classification symbols)

IPC:H04L,H04W

Documentation searched other than minimum documentation to the extent that such documents are included in the fields searched

Electronic data base consulted during the international search (name of data base and, where practicable, search terms used)

CNTXT, DETXT, DWPI, ENTXT, ENTXTC, EPTXT, FRTXT, GBTXT, JPTXT, KRTXT, USTXT, VEN, WOTXT: 记录, 链路, 路径, 路由, 目标, 日志, 软件定义, 卫星, 信令, 质量, 重传, 重新传输, ARQ, connection, DTN, HARQ, link, LTP, QoS, quality, satellite, SDN, signaling, retransmi+, rout+, signal+

**C. DOCUMENTS CONSIDERED TO BE RELEVANT**

| Category* | Citation of document, with indication, where appropriate, of the relevant passages | Relevant to claim No. |
|---|---|---|
| PX | CN 115334613 A (NO.6 RESEARCH INSTITUTE OF CHINA ELECTRONICS INFORMATION INDUSTRY GROUP CORP.) 11 November 2022 (2022-11-11) description, paragraphs 3-76, and figures 1-3 | 1-12 |
| X | CN 106059960 A (BEIJING JIAOTONG UNIVERSITY) 26 October 2016 (2016-10-26) description, paragraphs 2-3 and 63-99, and figures 1-9 | 1, 7-12 |
| X | CN 106059650 A (BEIJING JIAOTONG UNIVERSITY) 26 October 2016 (2016-10-26) description, paragraphs 2-7 and 67-115, and figures 1-7 | 1, 8-12 |
| A | CN 109714263 A (BEIJING UNIVERSITY OF POSTS AND TELECOMMUNICATIONS) 03 May 2019 (2019-05-03) entire document | 1-12 |
| A | CN 115150302 A (NO.54 INSTITUTE OF CHINA ELECTRONICS SCIENCE & TECHNOLOGY GROUP et al.) 04 October 2022 (2022-10-04) entire document | 1-12 |
| A | US 2020259558 A1 (LOCKHEED MARTIN CORP.) 13 August 2020 (2020-08-13) entire document | 1-12 |

☐ Further documents are listed in the continuation of Box C.      ☑ See patent family annex.

| * Special categories of cited documents: | |
|---|---|
| "A" document defining the general state of the art which is not considered to be of particular relevance | "T" later document published after the international filing date or priority date and not in conflict with the application but cited to understand the principle or theory underlying the invention |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **29 August 2023** | **06 September 2023** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/101100**

| Patent document cited in search report | | | Publication date (day/month/year) | Patent family member(s) | | | Publication date (day/month/year) |
|---|---|---|---|---|---|---|---|
| CN | 115334613 | A | 11 November 2022 | None | | | |
| CN | 106059960 | A | 26 October 2016 | None | | | |
| CN | 106059650 | A | 26 October 2016 | None | | | |
| CN | 109714263 | A | 03 May 2019 | None | | | |
| CN | 115150302 | A | 04 October 2022 | None | | | |
| US | 2020259558 | A1 | 13 August 2020 | CA | 3118702 | A1 | 13 August 2020 |
| | | | | EP | 3921957 | A1 | 15 December 2021 |
| | | | | WO | 2020163825 | A1 | 13 August 2020 |

Form PCT/ISA/210 (patent family annex) (July 2022)

14